# EUROPÄISCHE PATENTSCHRIFT

(11) **EP 3 201 650 B1**
(45) Veröffentlichungstag und Bekanntmachung des Hinweises auf die Patenterteilung: **18.05.2022**
(21) Anmeldenummer: 15763856.0
(22) Anmeldetag: 04.09.2015
(51) Int. Cl.: G01S 17/931, G01S 7/481, G01S 7/497

(54) **FENSTERKAPPE FÜR DAS GEHÄUSE EINER ABTASTENDEN OPTOELEKTRONISCHEN MESSVORRICHTUNG UND GEHÄUSE MIT EINER SOLCHEN**
WINDOW CAP FOR THE HOUSING OF A SCANNING OPTOELECTRONIC MEASURING DEVICE AND HOUSING WITH SAME
CACHE À FENÊTRE POUR LE BOÎTIER D'UN DISPOSITIF DE MESURE OPTOÉLECTRONIQUE À BALAYAGE ET BOÎTIER ÉQUIPÉ DE CELLE-CI

(30) Priorität: 02.10.2014 DE 102014114363
(43) Veröffentlichungstag der Anmeldung: 09.08.2017
(73) Patentinhaber: Valeo Schalter und Sensoren GmbH, 74321 Bietigheim-Bissingen (DE)
(72) Erfinder: HORVATH, Peter, 74321 Bietigheim-Bissingen (DE); NICOLAI, Jens, 74321 Bietigheim-Bissingen (DE)
(74) Vertreter: Withopf, Kristina
(86) Internationale Anmeldenummer: PCT/EP2015/070242
(87) Internationale Veröffentlichungsnummer: WO 2016/050447

(56) Entgegenhaltungen:
- EP-A1- 2 387 053
- DE-A1- 19 820 704
- DE-A1-102011 122 345
- GB-A- 1 514 107
- JP-A- H0 829 535
- US-A- 5 463 384
- US-A1- 2006 152 705

## Beschreibung

Die Erfindung betrifft ein Gehäuse für eine abtastende optoelektronische Messvorrichtung, insbesondere Laserscanner für ein Kraftfahrzeug, mit einer Fensterkappe mit einem für elektromagnetische Messstrahlen der Messvorrichtung transparenten Fenster und einer winklig zum Fenster ausgebildeten und eine umlaufende Kontur ausbildenden Randwandung, wobei die Fensterkappe eine Scheibenheizung mit Heizschleifen zum Erwärmen des transparenten Fensters aufweist, auf einem umlaufenden Fensterrand des Gehäuses außen aufgeschoben ist und in einem den Fensterrand überlappenden Abschnitt der Randwandung befestigt ist.

Im Automobilbereich werden zunehmend unterschiedlichste Fahrerassistenzsysteme eingesetzt, das heißt elektronische Zusatzeinrichtungen zur Unterstützung des Fahrers in bestimmten Fahrsituationen. Laser-basierte Systeme, auch unter der Bezeichnung "LIDAR" ("Light detection and ranging") bekannt, dienen der optischen Abstands- und Geschwindigkeitsmessung und ermöglichen die Erkennung von Objekten im Umfeld des Fahrzeugs mit einer sehr hohen Messgenauigkeit.

Bekannte optische Messvorrichtungen umfassen ein Gehäuse, in welchem mindestens ein optischer Sender zum Abstrahlen mindestens eines Sendestrahls und mindestens ein optischer Empfänger zum Empfangen eines Empfangsstrahls angeordnet sind. Eine derartige optische Messvorrichtung ist aus DE 10 2011 122 345 A1 bekannt. Der Empfänger empfängt die an Objekten und/oder Hindernissen reflektierten Strahlen und ermittelt nach dem Lichtlaufzeitprinzip den Abstand zu den Objekten und/oder Hindernissen. Das Gehäuse wird bei der bekannten Messvorrichtung von einer Abdeckscheibe abgeschlossen, welche ein für elektromagnetische Messstrahlen der Messvorrichtung transparentes Fenster ausbildet. Bei der bekannten Messvorrichtung sind ein Sendefenster und ein Empfangsfenster vorgesehen, wobei durch das Sendefenster Sendestrahlen aus dem Gehäuse austreten. Vom Umfeld reflektierte Sendestrahlen können durch das Empfangsfenster in das Gehäuse eindringen. Fallen reflektierte Sendestrahlen auf den im Gehäuse angeordneten Empfänger, so wird ein entsprechendes Empfangssignal bereitgestellt.

Aus der US 5 463 384 A ist ein Kollisionsvermeidungssystem bekannt, welches ein Objekterkennungsmodul umfasst, das an einem Fahrzeug angebracht ist, um Objekte in einer an dem Fahrzeug angrenzenden Zone zu detektieren.

Aus der US 2006/152705 A1 ist eine Radarvorrichtung bekannt, die durch ein Fensterteil eine Transmissionswelle in eine Umgebung eines Fahrzeugs aussendet und eine reflektierte Welle der Transmissionswelle detektiert.

Aus der JP H08 29535 A ist ein Laserradar bekannt, um Abstände zwischen Fahrzeuge in einem Kollisionsalarmsystem zu messen.

Aus der DE 198 20 704 A1 ist eine elektrische Einrichtung, insbesondere eine Abstandsregeleinrichtung für ein Kraftfahrzeug, bekannt, bei welcher in einem Gehäuse eine Sensoreinheit elektrisch mit einer auf einem Trägersubstrat angeordneten elektrischen Schaltung verbunden ist.

Üblicherweise sind die optischen Messvorrichtungen hinter einem Kühlergrill eines Kraftfahrzeugs montiert und sind somit Witterungseinflüssen wie Schnee, Eis und/oder Wasser ausgesetzt. Um Ablagerungen aus Witterungseinflüssen zu beseitigen wird die Abdeckscheibe indirekt über mindestens einen elektrischen Heizleiter beheizt. Bei der bekannten Messvorrichtung ist die Heizeinrichtung im wesentlichen im Bereich des Empfangsfensters angeordnet, wodurch verhindert ist, dass Sendestrahlen beim Senden durch die Heizeinrichtung verzerrt werden.

Bekannte Laserscanner neigen unter ungünstigen kalten Witterungsbedingungen zur Bildung eines Eis/Schneekragens, wobei sich oft eine Eis/Schnee-Zunge über die Abdeckscheibe schiebt und den Erfassungsbereich des Laserscanners beeinflusst, beziehungsweise komplett aufhebt.

Der vorliegenden Erfindung liegt die Aufgabe zugrunde, die Betriebsfähigkeit einer optoelektronischen Messvorrichtung, insbesondere eines Laserscanners für ein Kraftfahrzeug, unter kalten Witterungsbedingungen zu verbessern.

Diese Aufgabe wird erfindungsgemäß durch ein Gehäuse einer abtastenden optoelektronischen Messvorrichtung mit den Merkmalen des Anspruchs 1 gelöst. Erfindungsgemäß wird das für elektromagnetische Messstrahlen der Messvorrichtung transparente Fenster als Bestandteil einer Fensterkappe ausgebildet, welche eine winkelig zum Fenster ausgebildete und eine umlaufende Kontur bildende Randwandung umfasst. Das Fenster und die Randwandung stehen dabei winkelig zueinander, wodurch die Randwandung und das Fenster ein Volumen begrenzen. Unter einem für elektromagnetische Messstrahlen der Messvorrichtung transparenten Fenster wird verstanden, dass das Fenster, beziehungsweise das Material, welches das transparente Fenster bildet, im Spektralbereich der elektromagnetischen Strahlen transparent ist, vorzugsweise im Infrarotbereich. In anderen Spektralbereichen ist das Fenster nicht transparent und dient insbesondere als Sperrfilter für Tageslicht.

Die Randwandung ist eine umlaufende Wand, welche einerseits mit dem Fenster verbunden ist und anderseits einen freien Rand ausbildet. Das Fenster ist dabei quasi der Boden einer Fensterkappe, welche somit eine becherförmige Gestalt aufweist.

Die Fensterkappe wird gemäß der Erfindung auf einen umlaufenden Fensterrand des Gehäuses aufgeschoben und ist in einem den Fensterrand überlappenden Abschnitt der Randwandung der Fensterkappe befestigt. Während bei herkömmlichen Gehäusen für optoelektronische Messvorrichtungen eine Verbindungsstelle direkt im Frontbereich, das heißt der das Fenster aufweisenden Stirnseite liegt, ist erfindungsgemäß mit der Fensterkappe die Schnittstelle aus dem Frontbereich verlegt in einen Abschnitt, welcher deutlich weniger Umwelteinflüssen ausgesetzt ist. Die Fensterkappe ist in dem den Fensterrand des Gehäuses überlappenden Abschnitt innen befestigt, wodurch die Verbindungsstelle deutlich besser gegen Umwelteinflüsse durch Fahrbetrieb und durch Hochdruckreinigung geschützt ist als bei herkömmlichen Messvorrichtungen.

Die Kontur der umlaufenden Randwandung der Fensterkappe ist vorzugsweise kongruent zu dem umlaufenden Fensterrand des Gehäuses. Die kongruenten Konturen sind dabei derart aufeinander abgestimmt ausgebildet, dass zwischen der Fensterkappe und dem Gehäuse ein innen liegender Spalt ausgebildet ist, in welchem ein Verbindungsmittel angebracht ist. In einer bevorzugten Ausführungsform der Erfindung wird die Fensterklappe mit dem Fensterrand des Gehäuses verklebt. Ein Klebemittel kann dabei mit einfachen Mitteln in den zwischen Fensterkappe und Gehäuse gebildeten, innen liegenden Klebespalt eingelegt werden, beispielsweise ein Klebestreifen.

In einer vorteilhaften Ausführungsform der Erfindung weist die Randwandung der Fensterkappe vier Wandabschnitte auf, von denen jeweils zwei parallel zueinander liegen. Auf diese Weise ist eine schnelle und einfache Montage des Laserscanners möglich. Vorteilhaft tragen wenigstens zwei der Wandabschnitte über den Rand der Randwandung hinausragende Führungszungen. Die Führungszungen wirken vorteilhaft mit Führungsnuten im Bereich des Fensterrands des Gehäuses zusammen und fördern eine präzise Ausrichtung der Fensterkappe bei der Befestigung an dem Gehäuse.

Das für elektromagnetische Messstrahlen der Messvorrichtung transparente Fenster ist vorteilhaft nach außen gewölbt, so dass ein großer Erfassungsbereich des Laserscanners bei kompakter Baugröße des Gehäuses gegeben ist.

Die nach außen gewölbte Form des transparenten Fensters bietet zudem einen reduzierten Strömungswiderstand und fördert das Abfließen von Wassertropfen.

Die Fensterkappe ist in einem vorteilhaften Ausführungsbeispiel ein einteiliges Bauteil aus einem für elektromagnetische Messstrahlen der Messvorrichtung transparenten Material. Ein derartiges einteiliges Bauteil ist bequem zu handhaben und kann mit geringem Aufwand montiert werden.

In einer besonders bevorzugten Ausführungsform der Erfindung ist der Fensterrand des Gehäuses, auf den erfindungsgemäß die Fensterkappe aufgeschoben wird und an der Innenseite verklebt wird, durch einen am Gehäuse befestigten Rahmen gebildet. Der Rahmen, welcher den Fensterrand ausbildet, kann abseits der den Witterungseinflüssen ausgesetzten Bereichen am Gehäuse befestigt werden, wodurch die Montage und insbesondere die Demontage einer gegebenenfalls im Betrieb des Kraftfahrzeug beschädigten Fensterkappe erleichtert ist.

In einer besonders bevorzugten Ausführungsform der Erfindung ist die Randwandung der Fensterkappe derart ausgebildet, dass die Randwandung oder deren Wandabschnitte in Einbaulage der Fensterkappe jeweils bündig mit dem Gehäuse abschließen. Auf diese Weise ist mit einer innen liegenden Befestigung der Fensterkappe mit einer quasi unsichtbar umlaufenden Randwandung für ein ansprechendes Design gesorgt, was insbesondere bei der Verwendung des Gehäuses mit einer Fensterkappe bei Messvorrichtungen für Kraftfahrzeuge zunehmend bedeutsam ist.

Die Fensterkappe weist erfindungsgemäß eine Scheibenheizung auf, welche über Heizschleifen das transparente Fenster erwärmt. Die Scheibenheizung ist vorteilhaft durch aufbringen einer leitfähigen, dauerhaft haftenden Verbindung auf die Innenseite der Fensterkappe realisiert. Eine gleichmäßige Wärmeverteilung ist mit zwei oder mehr parallel geschalteten Heizschleifen gegeben, welche vorteilhaft gleichlang sind. In der bevorzugten Ausführungsform der Erfindung ist das Sendefenster, das heißt der Emitterbereich frei von Heizschleifen, wodurch eine Beeinflussung der Sendestrahlen durch die Heizschleifen ausgeschlossen ist. Eine Kontaktierung der Leiterbahnen der Heizschleifen mit einer elektrischen Versorgung der Heizeinrichtung erfolgt erfindungsgemäß mittels Kontaktfedern.

Ein Ausführungsbeispiel der Erfindung ist nachstehend anhand der Zeichnung näher erläutert. Es zeigen:
- Fig. 1: eine perspektivische Ansicht eines Ausführungsbeispiels eines Gehäuses eines Laserscanners,
- Fig.2: eine perspektivische Ansicht eines Ausführungsbeispiels der Fensterkappe des Gehäuses gemäß Fig.1.

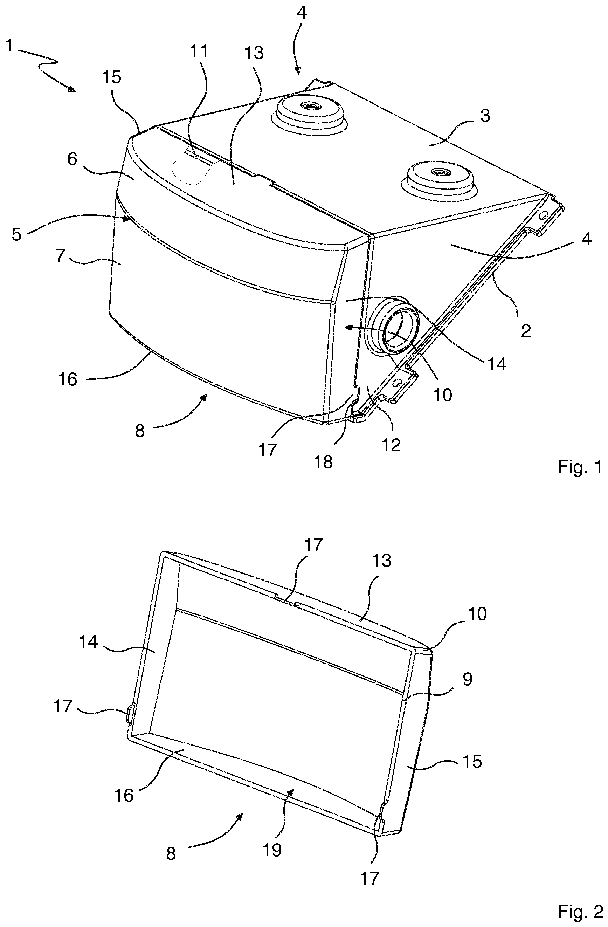

Fig. 1 zeigt in perspektivischer Ansicht ein Gehäuse 1 für einen Laserscanner. In dem Gehäuse 1 ist die Elektronik des Laserscanners angeordnet, nämlich mindestens ein optischer Sender zum Aussenden elektromagnetischer Strahlen und ein Empfänger zum Empfangen von reflektierten Strahlen.

Das Gehäuse 1 weist im gezeigten Ausführungsbeispiel eine Bodenwand 2 und eine Deckelwand 3 auf, welche durch Seitenwände 4 zu beiden Seiten des Gehäuses 1 miteinander verbunden sind. Die Bodenwand 2, die Deckelwand 3 und die Seitenwände 4 schließen einen Innenraum ein, in dem die Elektronik des Laserscanners aufgenommen ist. Das Gehäuse 1 sorgt dabei für eine elektromagnetische Abschirmung der Elektronik in seinem Inneren.

Die Bodenwand 2, die Deckelwand 3 und die Seitenwände 4 bilden eine offene Stirnseite des Gehäuses 1 aus, welche durch ein für elektromagnetische Messstrahlen der Messvorrichtung transparenten Fenster 5 abgedeckt ist. Das Fenster 5 weist dabei zwei Teilbereiche auf, nämlich ein dem optischen Sender zugeordnetes Sendefenster 6 und ein dem Empfänger zugeordnetes Empfangsfenster 7. Der optische Sender und der Empfänger im Inneren des Laserscanners weisen dabei jeweils eine Optik auf, welche dem jeweiligen Abschnitt des Fensters zugeordnet sind. Eine Optik des optischen Senders leitet demnach die vom optischen Sender emittierten Sendestrahlen durch das Sendefenster 6 des Fensters 5 nach außen. Die durch das Empfangsfenster 7 des Fensters 5 in das Gehäuse und die dahinter angeordnete Optik des Empfängers fallenden reflektierten Strahlen werden von der nicht gezeigten Optik auf den Empfänger umgeleitet.

Das Fenster 5 ist nach außen gewölbt ausgebildet, wodurch der Erfassungsbereich des Laserscanners vergrößert ist und zudem der Luftwiderstand verringert ist. Zudem wird bei einer Verwendung des Laserscanners an Kraftfahrzeugen bei Regenfahrten der Abfluss von Wassertropfen begünstigt.

Das Fenster 5 ist Bestandteil einer Fensterkappe 8, welche von der Rückseite her in Fig. 2 gezeigt ist. Für jeweils gleiche Merkmale sind dabei in beiden Zeichnungsfiguren die gleichen Bezugszeichen verwendet.

Die Fensterkappe 8 weist eine winklig zum Fenster 5 ausgebildete Randwandung 10 auf. Die Randwandung 10 bildet dabei eine umlaufende Kontur 9, so dass die Fensterkappe durch die Randwandung 10 und das transparente Fenster 5 ein becherförmiges Bauteil mit einer durch die Randwandung 10 definierten Öffnung ist. Im gezeigten Ausführungsbeispiel ist die Fensterkappe 8 mit transparentem Fenster 5 und der Randwandung 10 ein einteiliges Bauteil aus dem für die elektromagnetischen Messstrahlen der Messvorrichtung transparenten Material. Das Material ist dabei derart ausgewählt, dass eine Transparenz im Spektralbereich der elektromagnetischen Messstrahlen gegeben ist und gleichwohl eine Abblendung des Tageslichts erfolgt. Die Fensterkappe 8 bildet somit einen Sperrfilter für Tageslicht.

An dem Gehäuse 1 ist ein umlaufender Fensterrand 11 gebildet, auf den die Fensterkappe 8 außen aufgeschoben ist. Der Fensterrand 11 ist dabei wenigstens zu seiner umlaufenden Kante mit ebenen Abschnitten ausgebildet, welche im wesentlichen senkrecht zu der durch die Bodenwand 2, die Deckelwand 3 und die Seitenwände 4 begrenzten Ebene verlaufen. Dabei begrenzt der Fensterrand 11 eine Kontur, welche kongruent zu der Kontur 9 der Randwandung 10 der Fensterkappe 8 bzw, dessen Abschnitten ist. Die Kontur der Randwandung 10 der Fensterkappe 8 und die Kontur des Fensterrands 11 sind dabei derart aufeinander abgestimmt, dass zwischen Fensterkappe 8 und Gehäuse 1 ein innen liegender Spalt ausgebildet ist. In dem innen liegenden Spalt wird ein Verbindungsmittel angebracht, welches die Fensterkappe 4 an dem Gehäuse 1 festhält. In dem bevorzugten Ausführungsbeispiel ist die Fensterkappe 8 mit dem Fensterrand 11 des Gehäuses 1 verklebt. Dabei werden die sich gegenseitig überlappenden Abschnitte der Randwandung 10 und des Fensterrands 11 miteinander umlaufend verbunden, insbesondere durch einen Klebestreifen.

Die Verbindung der Fensterkappe 8 mit dem Gehäuse 1 liegt auf einer Innenseite 19 der Randwandung 10 der Fensterkappe 8. Das Verbindungsmittel, insbesondere ein Klebestreifen, liegt daher auf der Innenseite 19 der Fensterkappe 8 geschützt vor Witterungseinflüssen.

Im gezeigten Ausführungsbeispiel ist der Fensterrand 11 durch einen Rahmen 12 ausgebildet, welcher seinerseits an dem Gehäuse 1 befestigt ist.

Die Seitenwand 4 der Fensterkappe 1 weist vier Seitenwandabschnitte 13, 14, 15, 16 auf, von denen jeweils zwei parallel zueinander liegen. Auf diese Weise bildet die Fensterkappe 8 einen Deckel, welcher auf das Gehäuse 1 aufgeschoben werden kann und das Gehäuse 1 verschließt.

Wenigstens zwei der Seitenwandabschnitte 13, 14, 15, 16 weisen über den Rand der Randwandung 10 hinausragende Führungszungen 17 auf. Am Umfang des Rahmens 12 ist jeweils auf Höhe der Führungszungen 17 der Fensterkappe 8 jeweils eine Führungsnut 18 ausgebildet. Die Führungsnut 18 wirkt mit den Führungszungen 17 zusammen, wobei beim Aufschieben der Fensterkappe auf das Gehäuse 1 die Führungszungen 17 in die Führungsnuten 18 einschiebbar sind. Auf diese Weise bilden die Führungszungen 17 und die Führungsnuten 18 eine Führung, welche die Fensterkappe beim Verbindungsprozess beziehungsweise beim Ankleben der Fensterkappe 8 an das Gehäuse 1 positionieren.

Vorzugsweise ist wenigstens der Deckelwand 3 und den beiden Seitenwänden 4 jeweils eine Führung zugeordnet, das heißt jeweils eine Führungszunge 17 an den entsprechenden Seitenwandabschnitten 13, 14, 15.

Ein ansprechendes Design des Gehäuses 1 und darüber hinaus ein optimaler Schutz der Klebestelle ist durch eine fluchtende Anordnung der Seitenwandabschnitte 13 mit dem Gehäuse gegeben. Durch die innen liegende Verklebung der Fensterkappe 8 mit dem Gehäuse 1 beziehungsweise die an dem Gehäuse 1 befestigten Rahmen 12 ist die Verbindungsstelle zwischen dem Fenster und dem Gehäuse von dem Fenster entfernt, so dass das transparente Fenster vor Umwelteinflüssen weitgehend geschützt ist und die Bildung einer Eiszunge auf dem Fenster 5 entgegengewirkt ist.

## Patentansprüche

1. Gehäuse für eine abtastende optoelektronische Messvorrichtung, insbesondere Laserscanner für ein Kraftfahrzeug, mit einer Fensterkappe (8) mit einem für elektromagnetische Messstrahlen der Messvorrichtung transparenten Fenster (5) und einer winklig zum Fenster (5) ausgebildeten und eine umlaufende Kontur ausbildenden Randwandung (10), wobei die Fensterkappe eine Scheibenheizung mit Heizschleifen zum Erwärmen des transparenten Fensters (5) aufweist, auf einem umlaufenden Fensterrand (11) des Gehäuses (1) außen aufgeschoben ist und in einem den Fensterrand (11) überlappenden Abschnitt der Randwandung (10) befestigt ist,
**dadurch gekennzeichnet, dass** das Gehäuse (1) Kontaktfedern zum Kontaktieren von Leiterbahnen der Heizschleifen mit einer elektrischen Versorgung der Heizeinrichtung aufweist.

2. Gehäuse nach Anspruch 1,
**dadurch gekennzeichnet, dass**
die Randwandung (10) der Fensterkappe (8) mit dem Fensterrand (11) des Gehäuses (1) verklebt ist.

3. Gehäuse nach Anspruch 1 oder 2,
**dadurch gekennzeichnet, dass**
Seitenwände (4) des Gehäuses (1) den umlaufenden Fensterrand (11) tragen, wobei der Fensterrand (11) und die Randwandung (10) der Fensterkappe (8) mit kongruenten Konturen derart aufeinander ausgebildet sind, dass zwischen Fensterkappe (8) und Gehäuse (1) ein innen liegender Klebespalt ausgebildet ist.

4. Gehäuse nach Anspruch 3,
**dadurch gekennzeichnet, dass**
der Fensterrand (11) durch eine am Gehäuse (1) befestigten Rahmen (12) gebildet ist.

5. Gehäuse nach Anspruch 4,
**dadurch gekennzeichnet, dass**
der Rahmen (12) an seinem Umfang Führungsnuten (18) zur Aufnahme der Führungszungen (17) der Fensterkappe (8) aufweist.

6. Gehäuse nach einem der Ansprüche 1 bis 5,
**dadurch gekennzeichnet, dass**
die Randwandung (10) der Fensterkappe (8) bündig mit dem Gehäuse (1) abschließt.

7. Gehäuse nach Anspruch 1,
**dadurch gekennzeichnet, dass**
die Randwandung (10) der Fensterkappe (8) vier Wandabschnitte (13, 14, 15, 16) aufweist, von denen jeweils zwei parallel zueinander liegen.

8. Gehäuse nach Anspruch 7,
**dadurch gekennzeichnet, dass**
wenigstens zwei der Wandabschnitte (13, 14, 15, 16) über den Rand der Randwandung (10) hinausragende Führungszungen (17) tragen.

9. Gehäuse nach Anspruch 1,
**dadurch gekennzeichnet, dass**
das Fenster (5) nach außen gewölbt ausgebildet ist.

10. Gehäuse nach Anspruch 1,
**dadurch gekennzeichnet, dass**
die Fensterkappe (8) ein einteiliges Bauteil aus einem für elektromagnetische Messstrahlen der Messvorrichtung transparenten Material ist.

## Claims

1. Housing for a scanning optoelectronic measuring device, in particular laser scanner for a motor vehicle, having a window cap (8) with a window (5) transparent to electromagnetic measurement beams of the measuring device and with an edge wall (10) formed at an angle to the window (5) and forming an encircling contour, wherein the window cap has a window heater with heating loops for heating the transparent window (5), is pushed onto the outside of an encircling window edge (11) of the housing (1) and is fastened in a portion of the edge wall (10) overlapping the window edge (11),
**characterized in that** the housing (1) has contact springs for contact-connecting conductor tracks of the heating loops to an electrical power supply of the heating device.

2. Housing according to Claim 1,
**characterized in that**
the edge wall (10) of the window cap (8) is adhesively bonded to the window edge (11) of the housing (1).

3. Housing according to Claim 1 or 2,
**characterized in that**
side walls (4) of the housing (1) support the encircling window edge (11), wherein the window edge (11) and the edge wall (10) of the window cap (8) are formed with congruent contours to one another in such a way that an internal adhesive gap is formed between the window cap (8) and the housing (1).

4. Housing according to Claim 3,
**characterized in that**
the window edge (11) is formed by a frame (12) fastened to the housing (1).

5. Housing according to Claim 4,
**characterized in that**
the frame (12) has, over its periphery, guide grooves (18) for receiving the guide tongues (17) of the window cap (8).

6. Housing according to one of Claims 1 to 5, **characterized in that**
the edge wall (10) of the window cap (8) terminates flush with the housing (1).

7. Housing according to Claim 1,
**characterized in that**
the edge wall (10) of the window cap (8) has four wall portions (13, 14, 15, 16), of which in each case two lie parallel to one another.

8. Housing according to Claim 7,
**characterized in that**
at least two of the wall portions (13, 14, 15, 16) support guide tongues (17) protruding beyond the edge of the edge wall (10).

9. Housing according to Claim 1,
**characterized in that**
the window (5) is curved outwards.

10. Housing according to Claim 1,
**characterized in that**
the window cap (8) is a one-piece component composed of a material transparent to electromagnetic measurement beams of the measuring device.

## Revendications

1. Boîtier pour un dispositif de mesure optoélectronique à balayage, notamment un scanner laser pour un véhicule automobile, comprenant un cache de fenêtre (8) comprenant une fenêtre (5) transparente aux rayons de mesure électromagnétiques du dispositif de mesure et une paroi de bord (10) configurée à un angle par rapport à la fenêtre (5) et formant un contour périphérique, le cache de fenêtre présentant un chauffage de vitre comprenant des boucles de chauffage pour chauffer la fenêtre transparente (5), étant enfilé à l'extérieur sur un bord de fenêtre périphérique (11) du boîtier (1) et étant fixé dans une section de la paroi de bord (10) chevauchant le bord de fenêtre (11), **caractérisé en ce que** le boîtier (1) présente des ressorts de contact pour mettre en contact des pistes conductrices des boucles de chauffage avec une alimentation électrique du dispositif de chauffage.

2. Boîtier selon la revendication 1, **caractérisé en ce que** la paroi de bord (10) du cache de fenêtre (8) est collée au bord de fenêtre (11) du boîtier (1).

3. Boîtier selon la revendication 1 ou 2, **caractérisé en ce que** des parois latérales (4) du boîtier (1) portent le bord de fenêtre périphérique (11), le bord de fenêtre (11) et la paroi de bord (10) du cache de fenêtre (8) étant configurés avec des contours congruents de telle sorte qu'une fente de collage intérieure est formée entre le cache de fenêtre (8) et le boîtier (1).

4. Boîtier selon la revendication 3, **caractérisé en ce que** le bord de fenêtre (11) est formé par un cadre (12) fixé au boîtier (1).

5. Boîtier selon la revendication 4, **caractérisé en ce que** le cadre (12) présente sur son pourtour des rainures de guidage (18) pour recevoir les languettes de guidage (17) du cache de fenêtre (8).

6. Boîtier selon l'une quelconque des revendications 1 à 5, **caractérisé en ce que** la paroi de bord (10) du cache de fenêtre (8) se termine en affleurement avec le boîtier (1) .

7. Boîtier selon la revendication 1, **caractérisé en ce que** la paroi de bord (10) du cache de fenêtre (8) présente quatre sections de paroi (13, 14, 15, 16), dont deux sont respectivement parallèles entre elles.

8. Boîtier selon la revendication 7, **caractérisé en ce qu'**au moins deux des sections de paroi (13, 14, 15, 16) portent des languettes de guidage (17) dépassant du bord de la paroi de bord (10).

9. Boîtier selon la revendication 1, **caractérisé en ce que** la fenêtre (5) est configurée sous forme bombée vers l'extérieur.

10. Boîtier selon la revendication 1, **caractérisé en ce que** le cache de la fenêtre (8) est un composant d'un seul tenant en une matière transparente aux rayons de mesure électromagnétiques du dispositif de mesure.
